# EUROPÄISCHE PATENTSCHRIFT

(11) **EP 3 598 188 B1**
(45) Veröffentlichungstag und Bekanntmachung des Hinweises auf die Patenterteilung: **16.03.2022**
(21) Anmeldenummer: 19173212.2
(22) Anmeldetag: 08.05.2019
(51) Int. Cl.: G02B 6/38

(54) **KUPPLUNG ZUR AUSBILDUNG EINER OPTISCHEN STECKVERBINDUNG**
ADAPTER FOR FORMING AN OPTICAL CONNECTION
ACCOUPLEMENT PERMETTANT DE FORMER UNE CONNECTION OPTIQUE

(30) Priorität: 17.07.2018 DE 102018117223
(43) Veröffentlichungstag der Anmeldung: 22.01.2020
(73) Patentinhaber: Neutrik AG, 9494 Schaan (LI)
(72) Erfinder: DOBLER, Oliver, 6774 Tschagguns (AT)
(74) Vertreter: Torggler & Hofmann Patentanwälte - Rankweil

(56) Entgegenhaltungen:
- CN-U- 207 586 480
- JP-A- 2001 033 658
- US-A- 5 166 995
- US-A1- 2011 123 156

## Beschreibung

Die vorliegende Erfindung betrifft eine Kupplung zur Ausbildung einer optischen Steckverbindung zwischen zwei optischen Steckverbindern gemäß des Patentanspruchs 1.

Bei gängigen, am Markt erhältlichen optischen Steckverbindern ist in der Regel vorgesehen, dass die Ferrule zumindest einen Lichtleiter umgibt. Am vorderen Ende der Ferrule liegt der Lichtleiter frei. Um zwei optische Steckverbinder so miteinander verbinden zu können, dass Lichtsignale von dem Lichtleiter der einen Ferrule auf den Lichtleiter der anderen Ferrule übertragen werden können, müssen die Ferrulen und die in ihnen angeordneten Lichtleitern sehr exakt relativ zueinander angeordnet werden. In der Regel werden hierzu die Ferrulen der beiden miteinander zu verbindenden optischen Steckverbinder mittels einer entsprechenden Kupplung so miteinander verbunden, dass die vorderen Enden der Ferrulen und die darin angeordneten Lichtleiter direkt aneinander anliegen und entsprechend ausgerichtet sind. Um dies zu gewährleisten, sind beim Stand der Technik Kupplungen zur Ausbildung einer optischen Steckverbindung zwischen zwei optischen Steckverbindern bekannt, welche einen Hülsenaufnahmekäfig aufweisen, in dessen Innenraum eine Führungshülse angeordnet ist. Durch Einführen der Ferrulen in die einander gegenüberliegenden Einführöffnungen der Führungshülse werden die Ferrulen und damit auch die in ihnen angeordneten Lichtleiter so exakt relativ zueinander angeordnet, dass die Lichtübertragung von einem optischen Steckverbinder auf den anderen funktioniert. Die Ferrulen der optischen Steckverbinder sind in entsprechenden Gehäusen der optischen Steckverbinder in der Regel beweglich, bevorzugt federbelastet beweglich, gelagert, sodass die Führungshülse für eine entsprechende Ausrichtung der Ferrulen relativ zueinander sorgen kann. In der Regel sind die Ferrulen klemmend in der Führungshülse gehalten. Dabei kann es beim Stand der Technik passieren, dass beim Herausziehen der optischen Steckverbinder aus der Kupplung und damit beim Herausziehen der Ferrulen aus der Führungshülse die Führungshülse versehentlich mit aus dem Hülsenaufnahmekäfig herausgezogen wird. Um dies zu verhindern, weist der Hülsenaufnahmekäfig, meist als Hinterschnitte ausgeführte, Längsanschläge auf, die die Ferrule im Innenraum des Hülsenaufnahmekäfigs zurückhalten sollen. Bei der Herstellung der Kupplung und des Hülsenaufnahmekäfigs in einem Guss- und/oder Spritzgussverfahren ist die Herstellung dieser als Hinterschnitte ausgeführten Längsanschläge in der Regel mit einem erhöhten werkzeugtechnischen Aufwand verbunden. Um entformt werden zu können, werden die Längsanschläge bzw. Hinterschnitte oft relativ flach ausgebildet, sodass es in der Praxis manchmal dazu kommt, dass die Führungshülse mit einer Ferrule versehentlich beim Lösen der optischen Steckverbindung aus dem Hülsenaufnahmekäfig herausgezogen wird.

Beim Stand der Technik sind auch schon Kupplungen bekannt, bei denen der Hülsenaufnahmekäfig aus zwei Hülsenaufnahmekäfigteilen besteht, welche über eine Rastverbindung miteinander verbunden werden können. In diesem Zusammenhang wird auf die WO 2011/128375 A1 verwiesen. In dieser Schrift ist vorgesehen, dass der Hülsenaufnahmekäfig aus einem Hauptteil und einem seitlich auf diesen Hauptteil aufschiebbaren Deckel besteht, wobei der Deckel mittels einer Rastverbindung am Hauptteil befestigt werden kann. Bei losgelöstem Deckel kann bei der, in der WO 2011/128375 A1 gezeigten, Kupplung die Führungshülse in den Hauptteil des Hülsenaufnahmekäfigs eingelegt werden, wie dies besonders gut in Fig. 2 der WO 2011/128375 A1 zu sehen ist.

Die Möglichkeit des seitlichen Einführens der Führungshülse in den Innenraum des Hülsenaufnahmekäfigs erlaubt es, die Längsanschläge so auszubilden, dass die Führungshülse nicht mehr versehentlich zusammen mit einer Ferrule aus dem Hülsenaufnahmekäfig herausgezogen werden kann.

Diese Lösung, wie sie in der WO 2011/128375 A1 realisiert ist, kann nur bei Kupplungen realisiert werden, bei denen der Hülsenaufnahmekäfig seitlich zugänglich ist.

Eine Kupplung gemäß des Oberbegriffs des Patentanspruchs 1 ist in der CN 207586480 U und in der US2011123156 A1 gezeigt.

Aufgabe der Erfindung ist es, eine Kupplung der eingangs genannten Art derart weiterzubilden, dass der Hülsenaufnahmekäfig möglichst einfach, beispielsweise ohne die in WO 2011/128375 A1 notwendige seitliche Zugänglichkeit, der Kupplung montiert werden kann.

Diese Aufgabe wird durch eine Kupplung gemäß Patentanspruch 1 gelöst.

Es ist somit vorgesehen, dass jedes der Hülsenaufnahmekäfigteile zwei oder drei oder mehr vorstehende Nasen und das andere der Hülsenaufnahmekäfigteile eine zur Anzahl der Nasen korrespondierende Anzahl an Nasenaufnahmen aufweist, wobei die Nasen beim Aufeinanderschieben der Hülsenaufnahmekäfigteile in der Richtung parallel zur Längsachse in die Nasenaufnahmen einschiebbar sind.

Es ist somit vorgesehen, dass die Rastverbindungsteile an den Hülsenaufnahmekäfigteilen so ausgebildet sind, dass die beiden Hülsenaufnahmekäfigteile durch ein einfaches aufeinander Schieben in einer Richtung parallel zur Längsachse zum Hülsenaufnahmekäfig verbunden werden können. Das Verbinden der Hülsenaufnahmekäfigteile zum Hülsenaufnahmekäfig erfolgt dann durch ein einfaches Einrasten der Rastverbindungsteile ineinander, sodass damit die Rastverbindung ausgebildet wird. Diese Rastverbindung kann, aber muss nicht, lösbar ausgebildet sein, da der Montagevorgang, also das Zusammenfügen der Hülsenaufnahmekäfigteile zum Hülsenaufnahmekäfig in der Regel nur einmal bei der Montage bzw. beim Zusammenbau der Kupplung erfolgen muss. Durch die Erfindung ist es möglich, zumindest eines der Hülsenaufnahmekäfigteile in derselben Richtung in die Kupplung, vorzugsweise in die entsprechende Steckeraufnahme der Kupplung einzuschieben, in der nach fertiger Montage der Kupplung dann auch zumindest einer der optischen Steckverbinder in die Kupplung eingeschoben wird, um die optische Steckverbindung auszubilden. Hierdurch wird zum Zusammenfügen der Hülsenaufnahmekäfigteile bzw. zur Ausbildung des Hülsenaufnahmekäfigs eine Wegsamkeit in der Kupplung genutzt, welche zum Einführen der optischen Steckverbinder in die Kupplung sowieso vorhanden sein muss. Eine zusätzliche seitliche Zugänglichkeit, wie sie in WO 2011/128375 A1 gefordert ist, ist bei der Erfindung somit nicht mehr notwendig. Durch diese zweiteilige Ausbildung des Hülsenaufnahmekäfigs durch zwei Hülsenaufnahmekäfigteile können die in der Regel auch bei der Erfindung als Hinterschnitte ausgebildeten Längsanschläge in einfacher Art und Weise so massiv ausgebildet werden, dass sie im fertig montierten Zustand des Hülsenaufnahmekäfigs sicher verhindern, dass die Führungshülse versehentlich zusammen mit einer Ferrule aus dem Hülsenaufnahmekäfig herausgezogen wird.

Der Vollständigkeit halber wird darauf hingewiesen, dass unter einer optischen Steckverbindung eine Steckverbindung verstanden wird, bei der zumindest zwei optische Steckverbinder bzw. ihre Ferrulen so miteinander verbunden werden, dass die in den Ferrulen vorhandenen Lichtleiter so zueinander ausgerichtet sind, dass die Übertragung von Lichtsignalen von dem einen der optischen Steckverbinder auf den anderen der optischen Steckverbinder möglich ist. Die Kupplung ist dabei das Bauteil, in welches die optischen Steckverbinder eingeschoben werden, um die optische Steckverbindung auszubilden. Der optische Steckverbinder kann eine, aber auch mehrere solcher erfindungsgemäßer Kupplungen aufweisen und natürlich sehr unterschiedlich ausgestaltet sein. Die erfindungsgemäße Kupplung dient in der Regel dazu, zwei optische Steckverbinder miteinander zu verbinden. Es ist aber auch denkbar, die Kupplung z.B. mit mehreren Hülsenaufnahmekäfigen und mehreren Führungshülsen so auszugestalten, dass mehr als zwei optische Steckverbinder, vorzugsweise paarweise, miteinander verbunden werden können. Die Anzahl der Bauteile erhöht sich damit entsprechend.

Der Hülsenaufnahmekäfig ist das Bauteil der Kupplung, das den Innenraum umschließt, in welchem sich die Führungshülse im fertig montierten Zustand der Kupplung befindet. Entsprechend könnte der Hülsenaufnahmekäfig auch als Hülsenaufnahmegehäuse oder Hülsenaufnahmekörper oder dergleichen bezeichnet werden. Die Führungshülse dient dazu, die Ferrulen der miteinander zu verbindenden optischen Steckverbinder relativ zueinander richtig auszurichten oder in anderen Worten zu zentrieren. Entsprechend könnte die Führungshülse auch als Zentrierungshülse bezeichnet werden. Die Einstecköffnungen des Hülsenaufnahmekäfigs sind einander gegenüberliegend angeordnet und liegen auf einer Längsachse des Hülsenaufnahmekäfigs, womit diese Längsachse dann auch vorgegeben ist. In dem Zustand, in dem die optischen Steckverbinder zur Ausbildung der optischen Steckverbindung in die Kupplung eingesteckt sind, liegen die Lichtleiter in den Ferrulen in bevorzugten Ausführungsvarianten auf dieser Längsachse des Hülsenaufnahmekäfigs. Der Vollständigkeit halber wird darauf hingewiesen, dass die Längsachse kein physisch also körperlich tatsächlich vorhandenes Bauteil sondern eine gedachte Gerade ist, auf der die Einstecköffnungen angeordnet sind.

Die Längsanschläge des Hülsenaufnahmekäfigs, welche die Führungshülse im Innenraum des Hülsenaufnahmekäfigs zurückhalten, umgeben die Einstecköffnungen des Hülsenaufnahmekäfigs zumindest bereichsweise und sind günstigerweise als Hinterschnitte ausgeführt. Die Hülsenaufnahmekäfigteile, wie auch ein entsprechendes Kupplungsgehäuse der Kupplung können aus Kunststoff, aber auch aus Metall oder auch aus Keramik ausgeführt werden. Besonders bevorzugt werden diese Bauteile kostengünstig als Spritzgussteile gefertigt. Eines der Hülsenaufnahmekäfigteile kann auch einstückig mit dem Kupplungsgehäuse der Kupplung ausgeführt sein. Die Führungshülse kann z.B. aus Metall, Keramik oder auch aus Kunststoff gefertigt sein. Günstigerweise ist die Führungshülse zum klemmenden Festhalten der Ferrulen elastisch deformierbar ausgebildet. Die Führungshülse kann in bevorzugten Ausgestaltungsformen als Rohr, also als zylindermantelförmiger Körper, insbesondere eines Kreiszylinders, ausgeführt sein. Die Elastizität der Führungshülse kann durch das Material alleine gegeben sein. Es kann, wie beim Stand der Technik an sich bekannt, aber auch ein Längsschlitz in der Führungshülse vorhanden sein, um der Führungshülse die benötigte elastische Deformierbarkeit zu verleihen. Bevorzugte Ausgestaltungsformen der Führungshülse sind als ein längsgeschlitztes Rohr ausgebildet. Auf den einander gegenüberliegenden Enden der Führungshülse befindet sich günstigerweise jeweils eine Einführöffnung zum Einstecken bzw. Einführen jeweils einer Ferrule eines optischen Steckverbinders in die Führungshülse. Bevorzugte Varianten sehen vor, dass die Führungshülse im eingerasteten Zustand der Rastverbindung mit Spiel, oder in anderen Worten relativ zum Hülsenaufnahmekäfig beweglich, im Innenraum des Hülsenaufnahmekäfigs gelagert ist. Bevorzugt liegt das Spiel sowohl in Richtung entlang der Längsachse des Hülsenaufnahmekäfigs als auch in dazu orthogonalen Richtungen vor. Hierdurch kann die Führungshülse, insbesondere dann, wenn die Ferrulen in sie eingeführt werden, innerhalb des Hülsenaufnahmekäfigs relativ zum Hülsenaufnahmekäfig bewegt werden, um so für die optimale Ausrichtung der beiden Ferrulen der miteinander zu verbindenden optischen Steckverbinder zu sorgen. Alternativ oder auch zusätzlich ist es in diesem Sinne aber auch möglich, den Hülsenaufnahmekäfig beweglich und somit mit Spiel im Kupplungsgehäuse der Kupplung anzuordnen. Der Vollständigkeit halber wird darauf hingewiesen, dass auch in den Varianten, in denen die Führungshülse mit Spiel im Innenraum des Hülsenaufnahmekäfigs gelagert ist, die Längsanschläge, welche die Einstecköffnungen des Hülsenaufnahmekäfigs umgeben, so ausgebildet werden können, dass sie sicher dafür sorgen, dass die Führungshülse nicht versehentlich zusammen mit einer Ferrule aus dem Hülsenaufnahmekäfig bzw. dessen Innenraum herausgezogen werden kann.

Erfindungsgemäße Kupplungen sind besonders bevorzugt zum miteinander Verbinden von optischen Steckverbindern des Typs PC (physical contact) ausgebildet. Natürlich kann die Erfindung auch für die Ausbildung von optischen Steckverbindungen mit anderen Typen von optischen Steckern verwendet werden.

Die Erfindung sieht vor, dass jedes der Hülsenaufnahmekäfigteile zwei oder drei oder mehr vorstehende Nasen und das andere der Hülsenaufnahmekäfigteile eine zur Anzahl der Nasen korrespondierende Anzahl an Nasenaufnahmen aufweist, wobei die Nasen beim Aufeinanderschieben der Hülsenaufnahmekäfigteile in der Richtung parallel zur Längsachse in die Nasenaufnahmen einschiebbar sind. Durch das Einschieben der Nasen in die Nasenaufnahmen kann eine automatische Ausrichtung der Hülsenaufnahmekäfigteile relativ zueinander beim aufeinander Schieben erfolgen. Die Nasen könnten auch als Vorsprünge des Hülsenaufnahmeteils bezeichnet werden. Die Nasenaufnahmen sind in der Regel als Ausnehmungen in einer entsprechenden Wand des Hülsenaufnahmeteils ausgebildet, in die Nasen bzw. diese Vorsprünge eingeschoben werden können. Nasen wie auch Nasenaufnahmen können grundsätzlich verschiedene Formen aufweisen. Bevorzugte Varianten sehen vor, dass die Nasen in Richtung hin zu ihren freien Enden verjüngt ausgebildet sind. Günstig ist es auch, wenn die Nasen symmetrisch bezüglich einer Symmetrieachse ausgebildet sind, welche im zusammengebauten Zustand des Hülsenaufnahmekäfigs parallel zur Längsachse des Hülsenaufnahmekäfigs verläuft. Dasselbe gilt günstigerweise für die Nasenaufnahmen.

Die Nasen und die dazu korrespondierenden Nasenaufnahmen der Hülsenaufnahmekäfigteile liegen in bevorzugten Varianten der Erfindung im fertig montierten Zustand des Hülsenaufnahmekäfigs günstigerweise bereichsweise formschlüssig aneinander an. In diesem Sinne ist bevorzugt vorgesehen, dass die Nasen im eingerasteten Zustand der Rastverbindung in einer Richtung parallel zur Längsachse und/oder in einer Umfangsrichtung um die Längsachse herum bereichsweise formschlüssig an einem entsprechenden, die Nasenaufnahmen begrenzenden Wandabschnitt des anderen der Hülsenaufnahmekäfigteile anliegen.

Die Nasenaufnahmen können z.B. jeweils zwischen zwei Nasen des jeweiligen Hülsenaufnahmekäfigteils angeordnet sein. Günstig ist es auch, wenn die Rastverbindungsteile an den Nasen, vorzugsweise entlang der Längsachse gesehen in einem mittleren Drittel der Nasen, ausgebildet sind. In diesen Ausgestaltungsformen stehen die Nasen somit in beide Richtungen parallel zur Längsachse über das jeweilige Rastverbindungsteil des Hülsenaufnahmekäfigteils über. Wenn die Rastverbindungsteile an den Nasen ausgebildet sind, sehen bevorzugte Varianten vor, dass die Nasen im Bereich der Rastverbindungsteile freigestellt sind. Freigestellt bedeutet dabei, dass die Nasen im Bereich des Rastverbindungsteils in einer Art und Weise nicht an irgendetwas anliegen, dass die Nasen beim Ein- und Ausrasten der Rastverbindungsteile in diesem Bereich elastisch ausgelenkt werden, also in anderen Worten ausfedern, kann. Man kann also auch davon sprechen, dass die Nasen im Bereich des jeweiligen Rastverbindungsteils zum elastischen Auslenken freigestellt sind.

Es kann vorgesehen sein, dass an einem der Hülsenaufnahmekäfigteile eine zur Längsachse normal vom Hülsenaufnahmekäfigteil nach außen abstehende Wand angeordnet ist. Grundsätzlich kann dies auch an beiden bzw. allen miteinander zu verbindenden Hülsenaufnahmekäfigteilen der Fall sein. In der Regel ist es aber ausreichend, wenn dies an genau einem der Hülsenaufnahmekäfigteile so realisiert ist. Die nach außen abstehende Wand kann an das Hülsenaufnahmekäfigteil angeformt sein, also Teil des Hülsenaufnahmekäfigteils sein. Die Wand kann der Verbindung des Hülsenaufnahmekäfigteils mit dem Kupplungsgehäuse der Kupplung dienen. Über die Wand kann das eine der Hülsenaufnahmekäfigteile auch fix, vorzugsweise einstückig, mit dem Kupplungsgehäuse verbunden sein. Das andere Hülsenaufnahmekäfigteil kann dann erfindungsgemäß durch das aufeinander Schieben in einer Richtung parallel zur Längsachse an dem, über die Wand am Kupplungsgehäuse befestigten Hülsenaufnahmekäfigteil befestigt werden. Bevorzugte Varianten sehen vor, dass das Rastverbindungsteil dieses einen der Hülsenaufnahmekäfigteile an der Wand, welche an dieses Hülsenaufnahmekäfigteil angeformt ist, ausgebildet ist. Die Wand kann, wie vorab bereits ausgeführt, Teil des Kupplungsgehäuses der Kupplung sein. Die Wand kann das Hülsenaufnahmekäfigteil umfangsgeschlossen umgeben.

Ein Kupplungsgehäuse der Kupplung weist günstigerweise einander gegenüberliegende Steckeraufnahmen für jeweils einen der optischen Steckverbinder auf. Die optischen Steckverbinder können, wie an sich bekannt, durch entsprechende Verbindungsmittel wie z.B. Rasten, Verschraubung oder dergleichen in der Steckeraufnahme am Kupplungsgehäuse lösbar befestigbar sein.

Neben der Kupplung an sich betrifft die Erfindung auch eine optische Steckverbindung mit zwei optischen Steckverbindern und einer erfindungsgemäßen Kupplung, wobei jeweils eine Ferrule des jeweiligen optischen Steckverbinders in jeweils einer zur Längsachse parallelen Richtung durch eine der Einstecköffnungen des Hülsenaufnahmekäfigs hindurch in die Führungshülse eingesteckt ist, wobei die Führungshülse die Ferrulen der optischen Steckverbinder mit ihren jeweiligen Lichtleitern relativ zueinander ausrichtet.

Bei den in den Ferrulen angeordneten Lichtleitern kann es sich um Lichtleitfasern aber auch um andere, an sich bekannte Lichtleiter zur Übertragung von optischen Signalen handeln.

Weitere Merkmale und Einzelheiten bevorzugter Ausgestaltungsformen der Erfindung werden beispielhaft im Nachfolgenden anhand der in den Figuren gezeigten erfindungsgemäßen Ausführungsvariante erläutert. Es zeigen:
- Fig. 1: eine perspektivische Außenansicht auf eine erfindungsgemäße Kupplung;
- Fig. 2: einen Längsschnitt im fertig montierten Zustand des Hülsenaufnahmekäfigs dieser Kupplung gemäß Fig. 1;
- Fig. 3 und 4: entsprechende Längsschnitte zur Fig. 2 während des Montagevorgangs aus zwei unterschiedlichen Perspektiven;
- Fig. 5: eine Explosionsdarstellung zu einer optischen Steckverbindung mit der Kupplung gemäß Fig. 1;
- Fig. 6: eine Explosionsdarstellung der Kupplung gemäß Fig. 1;
- Fig. 7: einen Längsschnitt durch die optische Steckverbindung mit einer erfindungsgemäßen Kupplung bevor die optischen Steckverbinder in die Kupplung eingeschoben sind;
- Fig. 8: einen Längsschnitt durch eine entsprechend vollständig ausgebildete optische Steckverbindung, in der die optischen Steckverbinder in die Kupplung eingesteckt sind;
- Fig. 9 bis 12: Detaildarstellungen zum Hülsenaufnahmekäfig;
- Fig. 13: einen Längsschnitt durch die miteinander verbundenen Hülsenaufnahmekäfigteile ohne Führungshülse und
- Fig. 14: einen Längsschnitt durch die miteinander verbundenen Hülsenaufnahmekäfigteile, wobei die Führungshülse im Innenraum des Hülsenaufnahmekäfigs angeordnet ist.

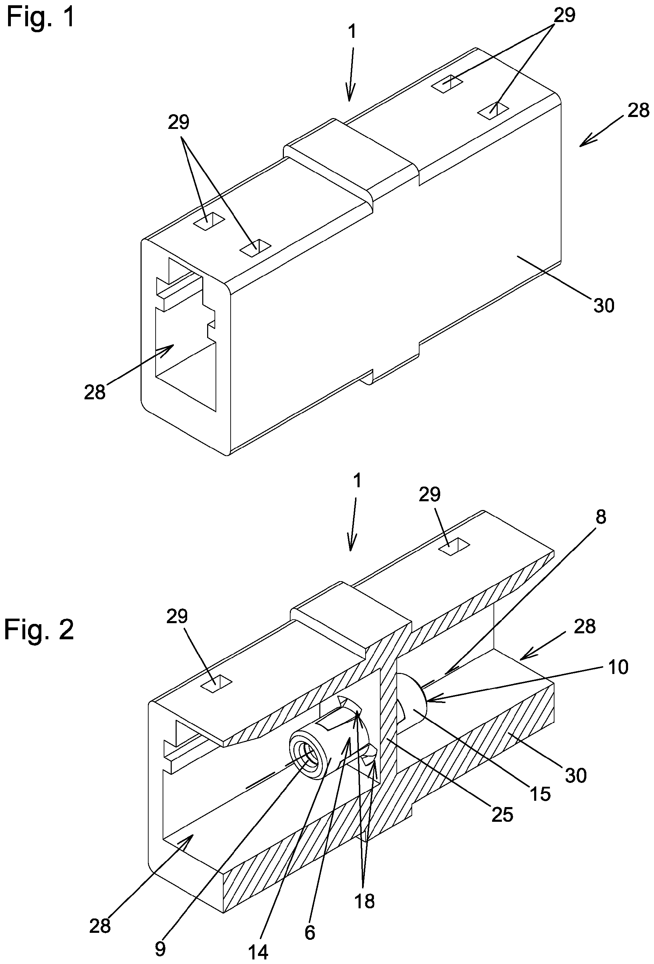

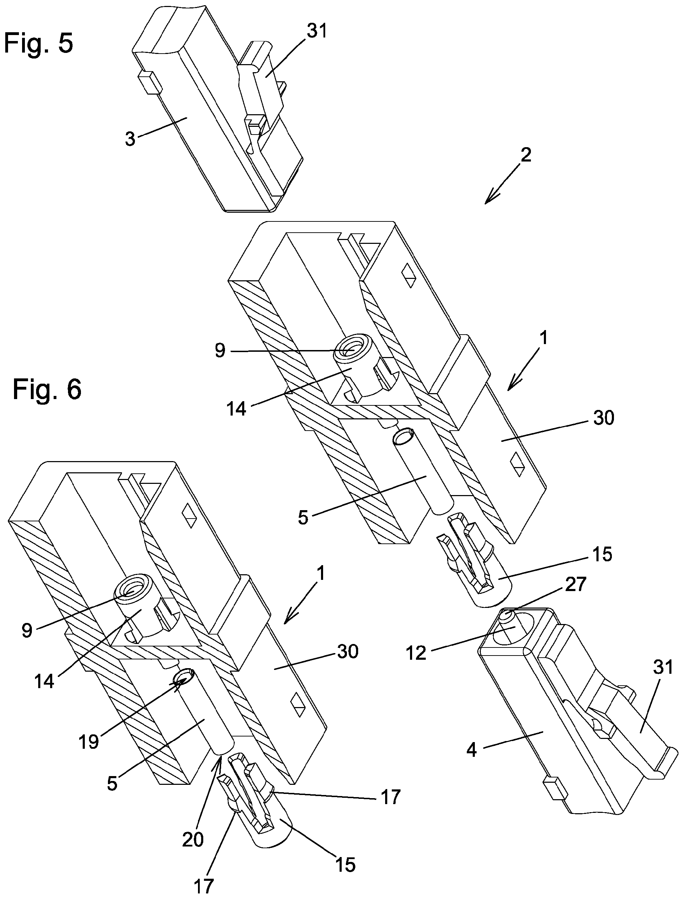

Die in Fig. 1 dargestellte Kupplung 1 zur Ausbildung einer optischen Steckverbindung 2 ist eine einfache Ausführungsform, welche dazu dient, zwei optische Steckverbinder 3 und 4 lichtleitend miteinander zu verbinden. Hierfür werden die optischen Steckverbinder 3 und 4 auf einander gegenüberliegenden Seiten in die jeweilige Steckeraufnahme 28 des Kupplungsgehäuses 30 eingeführt. In die Arretierungslöcher 29 können die in Fig. 5 dargestellten am jeweiligen optischen Steckverbinder 3 und 4 ausgebildeten Riegel 31 einrasten, um so den jeweiligen optischen Steckverbinder 3 bzw. 4 in der jeweiligen Steckeraufnahme 28 des Kupplungsgehäuses 30 lösbar festzuhalten. Dies ist an sich bekannt und muss nicht weiter erläutert werden. Anstelle der Rastverbindung zwischen dem Riegel 31 und den Arretierungslöchern 29 könnten natürlich auch andere beim Stand der Technik an sich bekannte Mittel vorgesehen sein, um den jeweiligen optischen Steckverbinder 3 bzw. 4 in der Steckeraufnahme 28 gegen ein versehentliches Herausziehen zu sichern. Diese Art der Verriegelung ist jedenfalls in der Regel lösbar ausgebildet, um die optischen Steckverbinder 3 und 4 aus dem Kupplungsgehäuse 30 zum Lösen der optischen Steckverbindung 2 auch wieder herausziehen zu können.

Die hier in diesem Ausführungsbeispiel gezeigte Variante ist eine sehr einfache Ausgestaltungsform der erfindungsgemäßen Kupplung 1, bei der nur zwei optische Steckverbinder 3 und 4 miteinander verbunden werden. Wie eingangs bereits erläutert, können erfindungsgemäße Kupplungen 1 auch so ausgebildet sein, dass mehr als zwei optische Steckverbinder 3 und 4, insbesondere paarweise, miteinander verbunden werden können. Natürlich können auch optische Steckverbindungen 2 realisiert werden, bei denen mehrere solche Kupplungen 1 zum Einsatz kommen, um eine entsprechend hohe Anzahl von optischen Steckverbindern 3 und 4, vorzugsweise paarweise, lichtleitend miteinander zu verbinden.

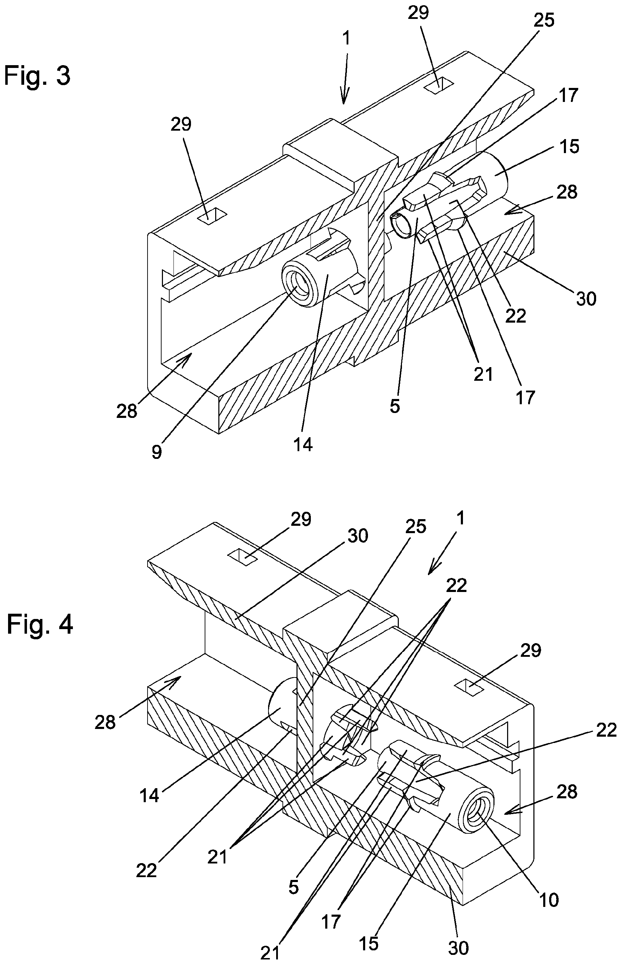

In den Fig. 2 bis 4 ist jeweils ein Längsschnitt durch die Kupplung 1 aus Fig. 1 gezeigt. In Fig. 2 ist der Hülsenaufnahmekäfig 6 fertig montiert. Die Hülsenaufnahmekäfigteile 14 und 15 sind also in einer Richtung parallel zur Längsachse 8 so weit aufeinander aufgeschoben, dass ihre jeweiligen Rastverbindungsteile 16 und 17 zur Ausbildung der Rastverbindung 18 ineinander eingerastet sind. Die Fig. 3 und 4 zeigen aus zwei verschiedenen Perspektiven die Situation, bevor die Hülsenaufnahmekäfigteile 14 und 15 in der Richtung parallel zur Längsachse 8 aufeinander geschoben werden.

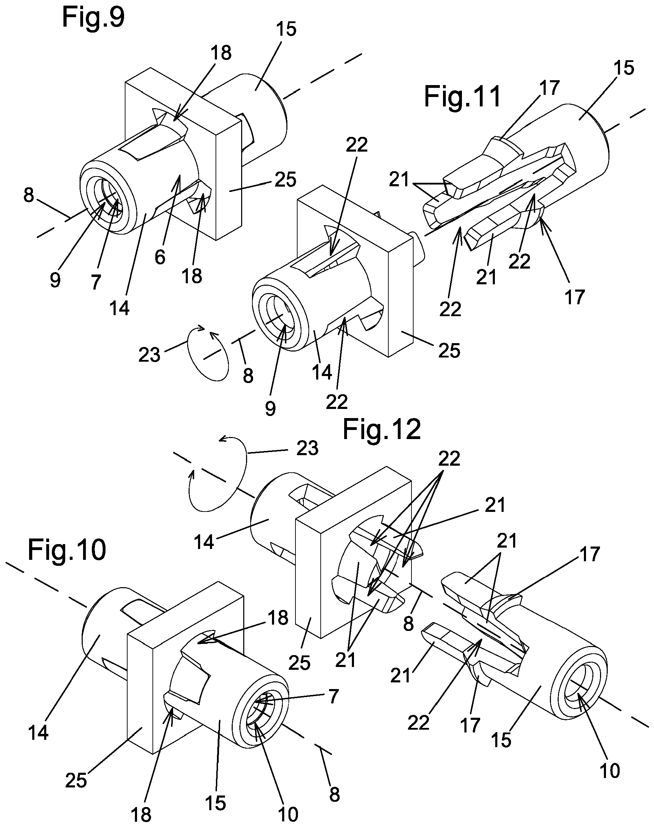

Im gezeigten Ausführungsbeispiel ist die in einer Richtung normal zur Längsachse 8 vom Hülsenaufnahmekäfigteil 14 nach außen abstehende Wand 25 einstückig an das Hülsenaufnahmekäfigteil 14 angeformt und auch ein einstückiges Teil des Kupplungsgehäuses 30, sodass das Hülsenaufnahmekäfigteil 14 einstückig mit dem Kupplungsgehäuse 30 verbunden ist. Wie eingangs bereits erläutert, muss dies aber natürlich nicht zwingend so vorgesehen sein. Auch beide Hülsenaufnahmekäfigteile 14 und 15 können zunächst von der Wand 25 losgelöst ausgebildet sein und erst durch das Einrasten ihrer Rastverbindungsteile 16 und 17 miteinander und mit dem Kupplungsgehäuse 30 bzw. der Wand 25 verbunden werden. In Fig. 2 ist jedenfalls zu erkennen, dass die Rastverbindung 18, mittels derer die Hülsenaufnahmekäfigteile 14 und 15 zum Hülsenaufnahmekäfig 6 verbunden sind, im Bereich der Wand 25 ausgebildet sind. Auch dies muss aber natürlich nicht zwingend so sein. Der detaillierte Aufbau der Hülsenaufnahmekäfigteile 14 und 15 wird weiter unten anhand der Fig. 9 bis 12 im Detail erläutert.

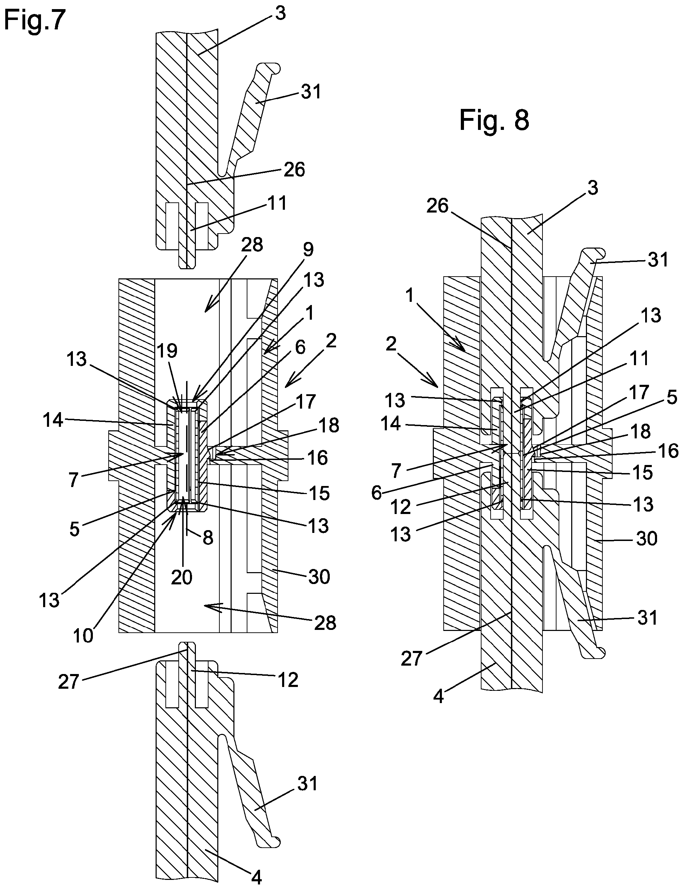

Fig. 5 zeigt in einem Längsschnitt eine Explosionsdarstellung der gesamten optischen Steckverbindung 2 mit den beiden an sich bekannten optischen Steckverbindern 3 und 4, den beiden Hülsenaufnahmekäfigteilen 14 und 15 sowie der Führungshülse 5. Zu sehen ist in Fig. 5 auch die Ferrule 12 des optischen Steckverbinders 4 mit ihrem zentral in der Ferrule 12 angeordneten Lichtleiter 27. Am optischen Steckverbinder 3 ist entsprechend eine Ferrule 11 mit einem entsprechenden Lichtleiter 26 ausgebildet, was in Fig. 5 aber nicht zu sehen ist. Hierzu wird auf die weiter unten erläuterten Fig. 7 und 8 verwiesen. Die optischen Steckverbinder 3 und 4 können wie beim Stand der Technik an sich bekannt ausgeführt sein. Sie sind daher hier nur schematisiert dargestellt. Es kann sich, wie gesagt, z.B. um optische Steckverbinder des Typs PC (physical contact) handeln.

Fig. 6 zeigt eine analoge Darstellung zu Fig. 5, wobei allerdings die optischen Steckverbinder 3 und 4 weggelassen sind und nur die Bauteile der Kupplung 1 gezeigt sind.

In Fig. 7 ist ein Längsschnitt durch die optischen Steckverbinder 2 und 3 sowie die Kupplung 1 gezeigt, bevor die optischen Steckverbinder 2 und 3 in die Steckeraufnahmen 28 eingeschoben werden. Fig. 8 zeigt einen Längsschnitt durch die fertig ausgebildete optische Steckverbindung 2, bei der die optischen Steckverbinder 3 und 4 in die einander gegenüberliegenden Steckeraufnahmen 28 des Kupplungsgehäuses 30 so weit eingeschoben sind, dass ihre Ferrulen 11 und 12 durch die Einstecköffnungen 9 und 10 des Hülsenaufnahmekäfigs 6 hindurch auf einander gegenüberliegenden Seiten durch die Einführöffnungen 19 und 20 der Führungshülse 5 und damit in die Führungshülse 5 eingeschoben sind. Die Führungshülse 5 richtet die Ferrulen 11 und 12 so relativ zueinander aus, dass die Lichtleiter 26 und 27 der jeweiligen Ferrule 11 und 12 so einander gegenüberliegend angeordnet sind, dass über die optische Steckverbindung 2 problemlos Lichtsignale übertragen werden können. Die Führungshülse 5 sorgt dabei für eine entsprechende Zentrierung der Ferrulen 11 und 12, sodass deren Lichtleiter 26 und 27 optimal zueinander ausgerichtet sind. Die Ferrulen 11 und 12 sind dabei klemmend in der entsprechend elastisch ausgebildeten Führungshülse 5 gehalten. Die Führungshülse 5 befindet sich im Innenraum 7 des Hülsenaufnahmekäfigs 6. Die die Einstecköffnung 9 und 10 umgebenden Längsanschläge 13 des Hülsenaufnahmekäfigs 6 verhindern, dass die Führungshülse 5 beim Lösen der optischen Steckverbindung 2 von einer der Ferrulen 11 oder 12 mit aus dem Hülsenaufnahmekäfig 6 herausgezogen werden kann. Im fertig verbundenen Zustand gemäß Fig. 8 liegen die Lichtleiter 26 und 27 der Ferrulen 11 und 12 in bevorzugten Ausgestaltungsformen, wie der hier gezeigten, auf der Längsachse 8.

In den Fig. 9 bis 12 sind nur die beiden Hülsenaufnahmekäfigteile 14 und 15 dargestellt. Die Fig. 9 und 10 zeigen die zum Hülsenaufnahmekäfig 6 miteinander verbundenen Hülsenaufnahmekäfigteile 14 und 15 aus zwei verschiedenen perspektivischen Ansichten. Die Fig. 11 und 12 zeigen aus diesen Ansichten jeweils den Zustand, in dem die Hülsenaufnahmekäfigteile 14 und 15 noch voneinander getrennt sind.

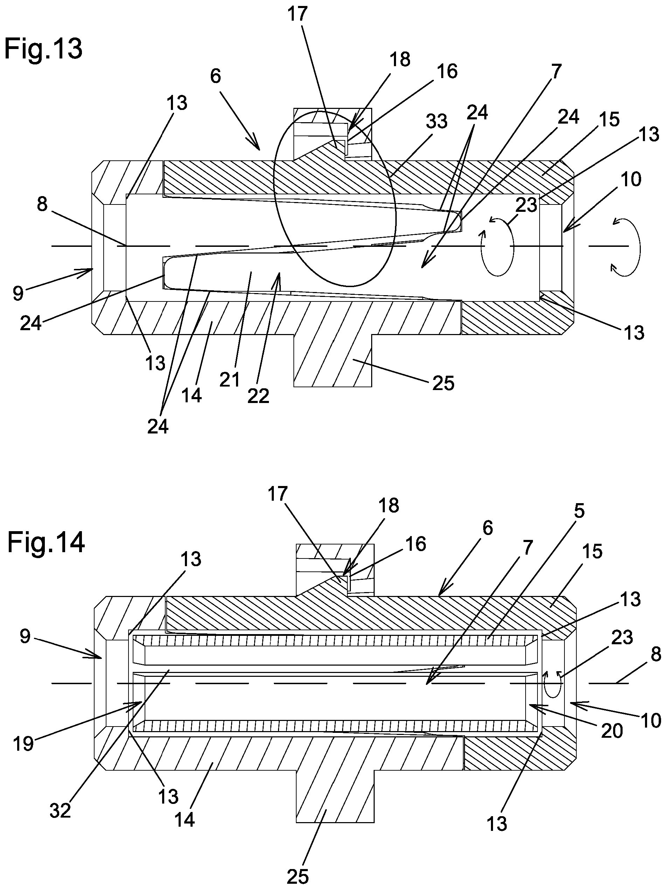

Wie bereits erläutert, ist in diesem Ausführungsbeispiel vorgesehen, dass die normal zur Längsachse 8 stehende Wand 25 einstückig an einem der Hülsenaufnahmekäfigteile, hier am Hülsenaufnahmekäfigteil 14 ausgebildet ist. Im gezeigten Ausführungsbeispiel weisen beide Hülsenaufnahmekäfigteile 14 und 15 jeweils Nasen und dazwischen angeordnete Nasenaufnahmen 22 auf. Beim aufeinander Schieben der Hülsenaufnahmekäfigteile 14 und 15 in der Richtung parallel zur Längsachse 8 werden die jeweiligen Nasen 21 in die dazu korrespondierenden Nasenaufnahmen 22 eingeschoben, was automatisch auch für eine entsprechende Ausrichtung der Hülsenaufnahmekäfigteile 14 und 15 aneinander in Umfangsrichtung 23 sorgt. In den Fig. 11 und 12 ist gut zu sehen, dass die hier als vorstehende Rastnasen ausgebildeten Rastverbindungsteile 17 des Hülsenaufnahmekäfigteils 15 an der jeweiligen Nase 21 in deren mittleren Drittel ausgebildet sind. D.h., dass sich die Nasen 21 auf beiden Seiten des jeweiligen Rastverbindungsteils 17 erstrecken. Die Rastverbindungsteile 16 des Hülsenaufnahmekäfigteils 14 sind im gezeigten Ausführungsbeispiel in der Wand 25, welche hier einen Teil des Hülsenaufnahmeteils 14 darstellt, ausgebildet, wie dies besonders gut in den Fig. 13 und 14 zu sehen ist. Dies muss natürlich nicht so sein. Die Rastverbindungsteile 16 des Hülsenaufnahmekäfigteils 14 können auch an einer anderen Stelle des Hülsenaufnahmekäfigteils 14 ausgebildet sein. Die Rastverbindungsteile 17 des Hülsenaufnahmekäfigteils 15 sind dann an entsprechender Stelle auszubilden, damit durch Einrasten der Rastverbindungsteile 16 und 17 ineinander die Rastverbindung(en) 18 ausgebildet werden können.

Ausgehend von den Fig. 11 und 12 wird in diesem Ausführungsbeispiel das Hülsenaufnahmekäfigteil 15 in Richtung parallel zur Längsachse 8 auf das Hülsenaufnahmekäfigteil 14 aufgeschoben, wodurch es zum Einrasten der Rastverbindungsteile 16 und 17 und damit zur Ausbildung der Rastverbindungen 18 kommt, womit in einfacher Art und Weise der Hülsenaufnahmekäfig 6 fertig montiert werden kann. Vorab wird natürlich die in den Fig. 9 bis 12 nicht dargestellte Führungshülse 5 so eingeführt, dass sie im fertig montierten Hülsenaufnahmekäfig 6 in dessen Innenraum 7 angeordnet ist.

Fig. 13 zeigt einen Längsschnitt durch den fertig montierten Hülsenaufnahmekäfig 6, wobei die Führungshülse 5 im Innenraum 7 nicht dargestellt ist. Gut zu sehen ist hier, wie die Nasen 21 des jeweiligen Hülsenaufnahmekäfigteils 14 bzw. 15 in die Nasenaufnahmen 22 des jeweils anderen Hülsenaufnahmekäfigteils 14 und 15 eingreifen. Vor allem ist zu sehen, dass im in Fig. 13 dargestellten, eingerasteten Zustand der Rastverbindung 18 die Nasen 21 in einer Richtung parallel zur Längsachse 8 und in diesem Beispiel auch in einer Umfangsrichtung 23 um die Längsachse 8 herum bereichsweise formschlüssig an den jeweils, die Nasenaufnahme 22 begrenzenden Wandabschnitten 24 des jeweils anderen der Hülsenaufnahmekäfigteile 14 und 15 anliegen. Durch diese Formschlüsse sind die Hülsenaufnahmekäfigteile 14 und 15 sowohl in den Richtungen parallel zur Längsachse 8 als auch in den Umfangsrichtungen 23 fix aneinander befestigt, wenn durch Eingriff der Rastverbindungsteile 16 und 17 ineinander die Rastverbindung 18 entsprechend ausgebildet ist.

Wie eingangs bereits erläutert, ist die Nase 21 im Bereich 33 des Rastverbindungsteils 17 günstigerweise freigestellt. Diese Freistellung, also das Nicht- Anliegen an irgendetwas anderem, hier insbesondere am Wandabschnitt 24, hat den Vorteil bzw. sollte so ausgeführt sein, dass die Nase 21 beim Ein- und Ausrasten der Rastverbindungsteile 16 und 17 in diesem Bereich 33 elastisch ausgelenkt werden, also in anderen Worten ausfedern, kann.

In Fig. 14 ist zusätzlich die Führungshülse 5 im Innenraum 7 des Hülsenaufnahmekäfigs 6 dargestellt. Gut zu sehen ist in diesem Längsschnitt der Längsschlitz 32 der Führungshülse 5, welcher ein elastisches Ausdehnen der Führungshülse 5 ermöglicht, wenn die Ferrulen 11 und 12 durch die Einstecköffnung 9 und 10 des Hülsenaufnahmekäfigs 6 hindurch in die Einführöffnungen 19 und 20 der Führungshülse 5 eingeschoben werden. Die als Hinterschnitte an den jeweiligen Hülsenaufnahmekäfigteilen 14 und 15 ausgebildeten Längsanschläge 13 umgeben die Einstecköffnungen 9 und 10 und verhindern, dass die Führungshülse 5 zusammen mit einer der Ferrulen 11 und 12 in einer Richtung parallel zur Längsachse 8 aus dem Innenraum 7 herausgezogen werden kann. In Fig. 14 ist auch gut zu sehen, dass die Führungshülse 5 in bevorzugten Augestaltungsformen, wie der hier gezeigten, auch im eingerasteten Zustand der Rastverbindung 18 mit Spiel und damit beweglich im Innenraum 7 des Hülsenaufnahmekäfigs 6 gelagert ist. Durch diese Beweglichkeit im Innenraum 7 kann die Führungshülse 5 die Ferrulen 11 und 12 der miteinander zu verbindenden optischen Steckverbinder 3 und 4 optimal relativ zueinander ausrichten. Wie eingangs bereits erläutert, könnte alternativ oder auch zusätzlich vorgesehen sein, dass der gesamte Hülsenaufnahmekäfig 6 beweglich am Kupplungsgehäuse 30 gelagert ist. In diesen Ausgestaltungsformen kann dann evtl. die Führungshülse 5 auch ohne Spiel, also fix im Innenraum 7 des Hülsenaufnahmekäfigs 6 gelagert sein.

**Legende**

| | | | |
|---|---|---|---|
| | zu den Hinweisziffern: | | |
| 1 | Kupplung | 29 | Arretierungsloch |
| 2 | optische Steckverbindung | 30 | Kupplungsgehäuse |
| 3 | optischer Steckverbinder | 31 | Riegel |
| 4 | optischer Steckverbinder | 32 | Längsschlitz |
| 5 | Führungshülse | 33 | Bereich |
| 6 | Hülsenaufnahmekäfig | | |
| 7 | Innenraum | | |
| 8 | Längsachse | | |
| 9 | Einstecköffnung | | |
| 10 | Einstecköffnung | | |
| 11 | Ferrule | | |
| 12 | Ferrule | | |
| 13 | Längsanschlag | | |
| 14 | Hülsenaufnahmekäfigteil | | |
| 15 | Hülsenaufnahmekäfigteil | | |
| 16 | Rastverbindungsteil | | |
| 17 | Rastverbindungsteil | | |
| 18 | Rastverbindung | | |
| 19 | Einführöffnung | | |
| 20 | Einführöffnung | | |
| 21 | Nase | | |
| 22 | Nasenaufnahme | | |
| 23 | Umfangsrichtung | | |
| 24 | Wandabschnitt | | |
| 25 | Wand | | |
| 26 | Lichtleiter | | |
| 27 | Lichtleiter | | |
| 28 | Steckeraufnahme | | |

## Patentansprüche

1. Kupplung (1) zur Ausbildung einer optischen Steckverbindung (2) zwischen zwei optischen Steckverbindern (3, 4), wobei die Kupplung (1) eine Führungshülse (5) und einen Hülsenaufnahmekäfig (6) mit einem Innenraum (7) zur Aufnahme der Führungshülse (5) aufweist, wobei der Hülsenaufnahmekäfig (6) auf einer Längsachse (8) des Hülsenaufnahmekäfigs (6) einander gegenüberliegend angeordnete Einstecköffnungen (9, 10) zum Einstecken jeweils einer Ferrule (11, 12) des jeweiligen optischen Steckverbinders (3, 4) in jeweils einer zur Längsachse (8) parallelen Richtung in die Führungshülse (5) aufweist, wobei die Einstecköffnungen (9, 10) jeweils zumindest bereichsweise von Längsanschlägen (13) des Hülsenaufnahmekäfigs (6) zur Verhinderung eines Herausziehens der Führungshülse (5) aus dem Innenraum (7) des Hülsenaufnahmekäfigs (6) umgeben sind und der Hülsenaufnahmekäfig (6) zwei Hülsenaufnahmekäfigteile (14, 15) aufweist und die Hülsenaufnahmekäfigteile (14, 15) jeweils ein Rastverbindungsteil (16, 17) zur Ausbildung einer Rastverbindung (18) aufweisen, und die Rastverbindungsteile (16, 17) zum aneinander Befestigen der Hülsenaufnahmekäfigteile (14, 15) durch ein aufeinander Schieben der Hülsenaufnahmekäfigteile (14, 15) in einer Richtung parallel zur Längsachse (8) ineinander einrastbar ausgebildet sind, **dadurch gekennzeichnet, dass** jedes der Hülsenaufnahmekäfigteile (14, 15) zwei oder drei oder mehr vorstehende Nasen (21) und das andere der Hülsenaufnahmekäfigteile (14, 15) eine zur Anzahl der Nasen (21) korrespondierende Anzahl an Nasenaufnahmen (22) aufweist, wobei die Nasen (21) beim Aufeinanderschieben der Hülsenaufnahmekäfigteile (14, 15) in der Richtung parallel zur Längsachse (8) in die Nasenaufnahmen (22) einschiebbar sind.

2. Kupplung (1) nach Anspruch 1, **dadurch gekennzeichnet, dass** die Führungshülse (5) zum klemmenden Festhalten der Ferrulen (11, 12) elastisch deformierbar ausgebildet ist und/oder dass die Führungshülse (5) als ein längsgeschlitztes Rohr ausgebildet ist und/oder dass die Führungshülse (5) auf einander gegenüberliegenden Enden jeweils eine Einführöffnung (19, 20) zum Einstecken jeweils einer der Ferrulen (11, 12) aufweist.

3. Kupplung (1) nach Anspruch 1 oder 2, **dadurch gekennzeichnet, dass** die Führungshülse (5) im eingerasteten Zustand der Rastverbindung (18) relativ zum Hülsenaufnahmekäfig (6) beweglich im Innenraum (7) des Hülsenaufnahmekäfigs (6) gelagert ist.

4. Kupplung (1) nach einem der Ansprüche 1 bis 3, **dadurch gekennzeichnet, dass** die Nasen (21) im eingerasteten Zustand der Rastverbindung (18) in einer Richtung parallel zur Längsachse (8) und/oder in einer Umfangsrichtung (23) um die Längsachse (8) herum bereichsweise formschlüssig an entsprechenden, die Nasenaufnahmen (22) begrenzenden Wandabschnitten (24) des anderen der Hülsenaufnahmekäfigteile (14, 15) anliegen.

5. Kupplung (1) nach einem der Ansprüche 1 bis 4, **dadurch gekennzeichnet, dass**
ein Rastverbindungsteil (17) an den Nasen (21), vorzugsweise entlang der Längsachse (8) gesehen in einem mittleren Drittel der Nasen (21), ausgebildet ist.

6. Kupplung (1) nach einem der Ansprüche 1 bis 5, **dadurch gekennzeichnet, dass** an, vorzugsweise genau, einem der Hülsenaufnahmekäfigteile (14, 15) eine zur Längsachse (8) normal vom Hülsenaufnahmekäfigteil (14, 15) nach außen abstehende Wand (25) angeordnet, vorzugsweise angeformt, ist.

7. Optische Steckverbindung (2) mit zwei optischen Steckverbindern (3, 4) und einer Kupplung (1) nach einem der Ansprüche 1 bis 6, wobei jeweils eine Ferrule (11, 12) des jeweiligen optischen Steckverbinders (3, 4) in jeweils einer zur Längsachse (8) parallelen Richtung durch eine der Einstecköffnungen (9, 10) des Hülsenaufnahmekäfigs (6) hindurch in die Führungshülse (5) eingesteckt ist, wobei die Führungshülse (5) die Ferrulen (11, 12) der optischen Steckverbinder (3, 4) mit ihren jeweiligen Lichtleitern (26, 27) relativ zueinander ausrichtet.

## Claims

1. Coupling (1) for forming an optical plug-in connection (2) between two optical plug-in connectors (3, 4), the coupling (1) comprising a guide sleeve (5) and a sleeve-receiving cage (6) having an inner chamber (7) for receiving the guide sleeve (5), the sleeve-receiving cage (6) comprising insertion openings (9, 10), which are arranged opposite one another on a longitudinal axis (8) of the sleeve-receiving cage (6), each for inserting a ferrule (11, 12) of the relevant optical plug-in connector (3, 4) into the guide sleeve (5) in each case in a direction parallel to the longitudinal axis (8), the insertion openings (9, 10) each being enclosed, at least in some regions, by longitudinal stops (13) of the sleeve-receiving cage (6) so as to prevent the guide sleeve (5) from being withdrawn out of the inner chamber (7) of the sleeve-receiving cage (6), and the sleeve-receiving cage (6) comprising two sleeve-receiving cage parts (14, 15), and the sleeve-receiving cage parts (14, 15) each comprising a latching connection part (16, 17) for forming a latching connection (18), and the latching connection parts (16, 17) being configured so as to be latchable into one another in order to fasten the sleeve-receiving cage parts (14, 15) to one another by sliding the sleeve-receiving cage parts (14, 15) onto one another in a direction parallel to the longitudinal axis (8), **characterised in that** each of the sleeve-receiving cage parts (14, 15) comprises two or three or more projecting lugs (21) and the other sleeve-receiving cage part (14, 15) comprises a number of lug receptacles (22) that corresponds to the number of lugs (21), the lugs (21) being slidable into the lug receptacles (22) when the sleeve-receiving cage parts (14, 15) are slid onto one another in the direction parallel to the longitudinal axis (8).

2. Coupling (1) according to claim 1, **characterised in that** the guide sleeve (5) is configured to be resiliently deformable in order to clampingly retain the ferrules (11, 12) and/or **in that** the guide sleeve (5) is formed as a tube having at least one longitudinal slot and/or **in that** the guide sleeve (5) comprises, on each opposite end, an introduction opening (19, 20), each for inserting one of the ferrules (11, 12).

3. Coupling (1) according to either claim 1 or claim 2, **characterised in that**, when the latching connection (18) is in the latched-in state, the guide sleeve (5) is mounted in the inner chamber (7) of the sleeve-receiving cage (6) so as to be movable relative to the sleeve-receiving cage (6).

4. Coupling (1) according to any of claims 1 to 3, **characterised in that**, when the latching connection (18) is in the latched-in state, the lugs (21) in some regions form-fittingly abut, in a direction parallel to the longitudinal axis (8) and/or in a circumferential direction (23) around the longitudinal axis (8), corresponding wall portions (24) of the other sleeve-receiving cage part (14, 15) that delimit the lug receptacles (22).

5. Coupling (1) according to any of claims 1 to 4, **characterised in that** a latching connection part (17) is formed on the lugs (21), preferably in a middle third of the lugs (21) when viewed along the longitudinal axis (8).

6. Coupling according to any of claims 1 to 5, **characterised in that**, on one, preferably precisely one, of the sleeve-receiving cage parts (14, 15), there is arranged, preferably moulded, a wall (25) that projects outwards from the sleeve-receiving cage part (14, 15) in a direction normal to the longitudinal axis (8).

7. Optical plug-in connection (2) comprising two optical plug-in connectors (3, 4) and a coupling (1) according to any of claims 1 to 6, wherein a ferrule (11, 12) of each optical plug-in connector (3, 4) is inserted into the guide sleeve (5) through a respective insertion opening (9, 10) of the sleeve-receiving cage (6) in each case in a direction parallel to the longitudinal axis (8), wherein the guide sleeve (5) orients the ferrules (11, 12) of the optical plug-in connectors (3, 4) relative to one another by their respective optical fibres (26, 27).

## Revendications

1. Raccord (1) pour former une connexion optique par enfichage (2) entre deux connecteurs optiques enfichables (3, 4), le raccord (1) étant muni d'une douille de guidage (5) et d'une cage de réception de douille (6) avec un espace intérieur (7) pour recevoir la douille de guidage (5), la cage de réception de douille (6) étant munie d'ouvertures d'enfichage (9, 10) disposées à l'opposé l'une à l'autre sur un axe longitudinal (8) de la cage de réception de douille (6) pour enficher dans chacune une férule (11, 12) du connecteur optique (3, 4) correspondant dans une direction parallèle à l'axe longitudinal (8) dans la douille de guidage (5), les ouvertures d'enfichage (9, 10) étant entourées chacune au moins par zones par des butées longitudinales (13) de la cage de réception de douille (6) pour empêcher une extraction de la douille de guidage (5) hors de l'espace intérieur (7) de la cage de réception de douille (6), et la cage de réception de douille (6) étant munie de deux parties de cage de réception de douille (14, 15), et les parties de cage de réception de douille (14, 15) étant munie chacune d'une partie de liaison par encliquetage (16, 17) pour former une liaison par encliquetage (18), et les parties de liaison par encliquetage (16, 17) étant réalisées de manière à pouvoir être encliquetées l'une dans l'autre pour fixer les parties de cage de réception de douille (14, 15) l'une à l'autre en faisant glisser les parties de cage de réception de douille (14, 15) l'une sur l'autre dans une direction parallèle à l'axe longitudinal (8), **caractérisé, en ce que** chacune des parties de cage de réception de douille (14, 15) est munie de deux ou trois ergots (21) saillants, ou plus, et l'autre des parties de cage de réception de douille (14, 15) est munie d'un nombre de logements d'ergot (22) correspondant au nombre d'ergots (21), les ergots (21) pouvant être insérés dans les logements d'ergot (22) lors du glissement des parties de cage de réception de douille (14, 15) l'une sur l'autre dans la direction parallèle à l'axe longitudinal (8).

2. Raccord (1) selon la revendication 1, **caractérisé en ce que** la douille de guidage (5) est conçue de manière à pouvoir être déformée élastiquement pour maintenir par serrage les férules (11, 12), et/ou **en ce que** la douille de guidage (5) est conçue sous la forme d'un tube fendu longitudinalement, et/ou **en ce que** la douille de guidage (5) est munie sur chacune de ses extrémités opposées d'une ouverture d'introduction (19, 20) pour l'insertion dans chacune d'elle d'une des férules (11, 12).

3. Raccord (1) selon la revendication 1 ou 2, **caractérisé en ce qu'à** l'état encliqueté de la liaison par encliquetage (18) est enclenchée, la douille de guidage (5) est logée dans l'espace intérieur (7) de la cage de réception de douille (6) mobile par rapport à la cage de réception de douille (6).

4. Raccord (1) selon l'une des revendications 1 à 3, **caractérisé en ce qu'à** l'état encliqueté de la liaison par encliquetage (18), les ergots (21) sont appliqués par zones, par complémentarité de forme, dans une direction parallèle à l'axe longitudinal (8) et/ou dans une direction périphérique (23) autour de l'axe longitudinal (8), contre des sections de paroi (24) correspondantes, délimitant les logements d'ergot (22) de l'autre des parties de cage de réception de douille (14, 15).

5. Raccord (1) selon l'une des revendications 1 à 4, **caractérisé en ce qu'**une partie de liaison par encliquetage (17) est formée sur les ergots (21), de préférence dans un tiers central des ergots (21), considéré le long de l'axe longitudinal (8).

6. Raccord (1) selon l'une des revendications 1 à 5, **caractérisé en ce qu'**une paroi (25) saillant vers l'extérieur de la partie de cage de réception de douille (14, 15) perpendiculairement à l'axe longitudinal (8) est disposée, de préférence formée, sur l'une des parties de cage de réception de douille (14, 15), de préférence exactement sur l'une d'entre elles.

7. Connexion optique par enfichage (2) comprenant deux connecteurs optiques enfichables (3, 4) et un raccord (1) selon l'une des revendications 1 à 6, une férule (11, 12) du connecteur optique enfichable (3, 4) correspondant étant introduite dans une direction parallèle à l'axe longitudinal (8) dans la douille de guidage (5) à travers l'une des ouvertures d'insertion (9, 10) de la cage de réception de douille (6), la douille de guidage (5) alignant l'une par rapport à l'autre les férules (11, 12) des connecteurs optiques enfichables (3, 4) avec leurs guides de lumière respectifs (26, 27).
